# EUROPÄISCHE PATENTSCHRIFT

(11) **EP 0 703 201 B1**
(45) Veröffentlichungstag und Bekanntmachung des Hinweises auf die Patenterteilung: **05.04.2000**
(21) Anmeldenummer: 95110223.5
(22) Anmeldetag: 30.06.1995
(51) Int. Cl.: C04B 41/49, C09D 183/04

(54) **Neue Anstrichstoffe, deren Herstellung und Verwendung**
Coating compositions, their preparation and use
Compositions de revêtement, leur préparation et usage

(30) Priorität: 13.07.1994 DE 4424685
(43) Veröffentlichungstag der Anmeldung: 27.03.1996
(73) Patentinhaber: GE Bayer Silicones GmbH & Co. KG, 40699 Erkrath (DE)
(72) Erfinder: Kober, Hermann, D-51467 Bergisch Gladbach (DE); de Montigny, Armand, Dr., D-51373 Leverkusen (DE); Mazanek, Jan, Dr., D-51061 Köln (DE)
(74) Vertreter: Leifert, Elmar, Dr.

(56) Entgegenhaltungen:
- EP-A- 0 163 085
- EP-A- 0 287 085
- EP-A- 0 546 421
- BE-B- 654 410

## Beschreibung

Die vorliegende Erfindung betrifft Anstrichstoffe, enthaltend mindestens eine wasserverdünnbare Polymerdispersion, mindestens ein endständig hydroxylgruppenhaltiges lineares Polydimethylsiloxan, mindestens ein Pigment und/oder mindestens einen Füllstoff und gegebenenfalls Alkalisilikonate, Alkylalkoxypolysiloxane und/oder weitere Zusätze, deren Herstellung und Verwendung.

Poröse mineralische Untergründe, wie z.B. Baustoffe aus Kalksandstein, Putz, Fassaden können nach verschiedenen Methoden gegen Umwelteinflüsse geschützt werden. Die Beschichtung der Baustoffe, Fassaden oder Bauten mit filmbildenden Beschichtungen hat sich mittlerweise durchgesetzt. Nach dem Stand der Technik bestehen diese im wesentlichen aus den folgenden Anstrichmaterialien: organischen Polymerdispersionen (Bindemitteln), Pigmenten und Füllstoffen.

Diese schränken jedoch nachteiligerweise die Diffusion von Wasserdampf ein. Höhere Anteile an Pigmenten und Füllstoffen führen zu verbesserten mikroporösen Filmen, deren Nachteil wiederum eine zu hohe Wasseraufnahme ist. Durch die Modifikation dieser Anstrichmaterialien mit Silikonen (z.B. DE-OS 12 84 007) entstehen mikroporöse, wasserdampfdurchlässige und gleichzeitig wasserabweisende Beschichtungen.

Nach dem Stand der Technik werden als Silikone überwiegend mehr oder weniger stark verzweigte Polysiloxane eingesetzt. Diese liegen als wäßrige Emulsionen vor und enthalten außer Wasser bis zu 20 Gew.-% organische, nicht mit Wasser mischbare Lösemittel wie Xylol oder höhersiedende aromatische und paraffinische Produkte. Die Verwendung organischer Lösemittel ist jedoch unter ökologischen Gesichtspunkten nicht unkritisch.

Die gewünschte wasserabweisende Wirkung, die Wasserdampfdurchlässigkeit und die Wetterbeständigkeit ist an ein bestimmtes Verhältnis von Polymerdispersion zu Silikon gebunden.

Nach dem Stand der Technik, wie z.B. DE-OS 12 84 007, liegt das Gew.-Verhältnis von Wirksubstanzen aus der Polymerdispersion zu den Polysiloxan-Wirksubstanzen bei <1.

Die nachfolgenden Angaben beziehen sich, soweit nicht anders erwähnt, auf Gewichtsangaben.

Polysiloxane, die im Überschuß (bezogen auf Wirksubstanz) eingesetzt werden, sind jedoch im Vergleich zu Polymerdispersionen wesentlich teurer. Die bisherigen Bemühungen, den Wirksubstanz-Anteil an Polymerdispersion zu erhöhen und den Polysiloxan-Anteil unter Beibehaltung der geforderten Eigenschaften zu erniedrigen, scheiterten jedoch. Vor allem verschlechterte sich dabei die Wasserdampfdurchlässigkeit der Beschichtungen.

Es bestand daher Bedarf an Anstrichsystemen, die ein Gew.-Verhältnis von Wirkstoff aus Polymerdispersion zu Polysiloxan von ≥1 aufweisen, wobei die eingesetzte Polysiloxan-Emulsion einen stark reduzierten Anteil an organischen Lösemitteln enthält oder sogar frei von diesen ist.

Aufgabe der vorliegenden Erfindung war daher die Bereitstellung von Anstrichsystemen, die die genannten Nachteile nicht aufweisen. Es wurde nun gefunden, daß Anstrichstoffe, enthaltend mindestens eine wasserverdünnbare Polymerdispersion, mindestens ein endständig hydroxylgruppenhaltiges, lineares Polydimethylsiloxan, mindestens ein Pigment, einen Füllstoff und gegebenenfalls Alkalisilikonate, Alkylalkoxypolysiloxane und/oder weitere Zusatzstoffe überragende Eigenschaften gegenüber dem Stand der Technik aufweisen.

Gegenstand der vorliegenden Erfindung sind somit Anstrichstoffe gemäß Anspruch 1 der vorliegenden Anmeldung.

Diese Anstrichstoffe enthalten
A) mindestens eine wasserverdünnbare Polymerdispersion,
B) mindestens ein endständig hydroxylgruppenhaltiges, lineares Polydimethylsiloxan,
C) mindestens ein Pigment und/oder mindestens einen Füllstoff und gegebenenfalls
D) Alkalisilikonate, Alkylalkoxypolysiloxane und/oder weitere Zusatzstoffe.

Die Anstrichstoffe enthalten
4 bis 12, bevorzugt 5 bis 10, besonders bevorzugt 6 bis 8 Gew.-% mindestens einer Polymerdispersion A),
B) 3 bis 16, bevorzugt 4 bis 12, besonders bevorzugt 4 bis 8 Gew.-% der Verbindung 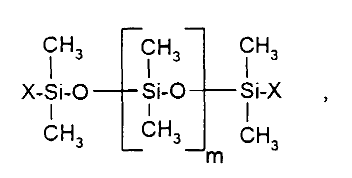 worin
   - X: einer Hydroxylgruppe oder Alkoxygruppe, bevorzugt einer Hydroxylgruppe entspricht,
   - m: eine Zahl von 50 bis 1000, bevorzugt 100 bis 600, besonders bevorzugt 150 bis 400 bedeutet,
C) 35 bis 65, bevorzugt 40 bis 60, besonders bevorzugt 45 bis 55 Gew.-% Pigmente, Füllstoffe,
D) 0 bis 2, bevorzugt 0 bis 1,5, besonders bevorzugt 0 bis 1 Gew.-% mindestens eines Alkalisilikonats und/oder Alkylalkoxypolysiloxans und 7 bis 58, bevorzugt 18 bis 51, besonders bevorzugt 29 bis 45 Gew.-% Wasser und gegebenenfalls weitere Zusätze wie z.B. Netz- und Verdickungsmittel und deren Hilfsstoffe,
wobei die Summe der Komponenten A), B), C) und D) 100 Gew.-% beträgt, das Gew.-Verhältnis von A) und B) bevorzugt >1, das Gew.-Verhältnis von A) und C) 1:5 bis 1:10 ist und sich die Gewichtsprozentangaben auf die Wirksubstanz bezieht.

In den erfindungsgemäßen Anstrichstoffen ist die Komponente A) ein beliebiges in Wasser oder in Gemischen aus Wasser und organischen Lösemitteln dispergiertes Polymer. Bevorzugt sind solche Polymere, die nach Entfernung der wäßrigen Phase zu Filmen austrocknen. Insbesondere bevorzugt sind Emulsions- und Suspensionspolymerisate und/oder -Mischpolymerisate. Als Monomere für die Herstellung der Komponente A) kommen beispielsweise in Frage:
Vinylester, wie Vinylacetat, Vinylpropionat, Vinyllaurat und Vinylstearat; Styrol und seine Derivate, wie Vinyltoluol und α-Methylstyrol; Olefine, wie Ethylen, Propylen, Isobutylen und Butadien; Vinylether, wie Vinylethylether; Acrylnitril; Acryl- und Methacrylester, wie Methylacrylat, Ethylacrylat, Methylmethacrylat und Butylacrylate; ungesättigte Dicarbonsäuren, wie Maleinsäure, Fumarsäure, Methylenmalonsäure, Itaconsäure, Citraconsäure und Tetrahydrophthalsäure; und die Mono- und Diester dieser Säuren, wie Maleinsäuredimethyl-, -diethylester und -di-n-butylester, Maleinsäuremono-(2-ethylhexyl-)ester, Fumarsäure-dimethylester, -diethylester, -di-n-butylester, -di-(2-ethylhexyl-)ester und -di-laurylester.

Bevorzugt sind Homo- und Copolymere von Styrol- und seinen Derivaten sowie von (Meth)acrylsäurederivaten. In einer weiteren Ausführungsform der vorliegenden Erfindung ist Komponente A) eine Poly(meth)acrylat- und/oder eine Polystyrol/(Meth)acrylatdispersion. Besonders bevorzugt sind Copolymere aus Styrol und (Meth)acrylsäurederivaten. Ein Gemisch aus verschiedenen Polymerdispersionen kann ebenfalls eingesetzt werden.

Die Herstellung der linearen, endständig hydroxylgruppenhaltigen Polydimethylsiloxane (Komponente B) kann nach an sich bekannten Verfahren erfolgen, wie sie z.B. in W. Noll, Chemie und Technologie der Silicone, Seite 162 ff (1968) beschrieben sind. Vorzusweise werden solche Polysiloxane vor ihrem Einsatz nach den an sich bekannten Verfahren in Wasser, gegebenenfalls unter Zugabe von <20 Gew.-% Lösemitteln, emulgiert. Die Emulsionen enthalten 20 bis 75 Gew.-%, bevorzugt 30 bis 70, besonders bevorzugt 45 bis 65 Gew.-% Polysiloxan.

Obwohl die Komponente B) auch geringe Anteile an organischen Lösemitteln enthalten kann, werden solche Verbindungen besonders bevorzugt, die frei von diesen sind. Das Molekulargewicht der Komponente B) kann in breiten Grenzen variiert werden. In einer bevorzugten Ausführungsform der vorliegenden Erfindung besitzt B) ein mittleres Molekulargewicht von 6000 bis 50000, bevorzugt 9000 bis 30000, besonders bevorzugt 12000 bis 20000, ist frei von organischen Lösemitteln und liegt als wäßrige Emulsion vor. Vorzugsweise wird B) mit einem mittleren Molekulargewicht von 15000 eingesetzt. Liegt das Molekulargewicht von B) oberhalb von 30000, so wird B) vorzugsweise unter Zugabe eines organischen Lösemittels einemulgiert.

Das optimale Gew.-Verhältnis der Komponenten A) und B) ist wichtig für die Wirksamkeit der erfindungsgemäßen Anstrichstoffe. Bei der Auswahl spielen nicht nur technische, sondern auch wirtschaftliche Gründe eine Rolle. So ist es möglich, mit einem Gew.-Verhältnis der Komponenten A) zu B) ≤ 1 zu arbeiten, wobei allerdings die relativ größeren Anteile der teureren Komponente B) die Wirtschaftlichkeit des Einsatzes der erfindungsgemäßen Anstrichmittel negativ beeinflussen.

In den erfindungsgemäßen Anstrichstoffen ist, unter Beibehaltung der geforderten anwendungstechnischen Eigenschaften, insbesondere bezüglich der Wasserdampfdurchlässigkeit und der Wasseraufnahme, überraschenderweise das Gew.-Verhältnis von A) zu B) vorzugsweise >1. Die obere Grenze für das Gew.-Verhältnis von A) zu B) ist, da ein minimaler Anteil an Komponente B) zum Erreichen der gewünschten Eigenschaften der Beschichtung benötigt wird, etwa 4:1. In einer bevorzugten Ausführungsform der vorliegenden Erfindung beträgt das Gew.-Verhältnis der Komponenten A) und B) 1,1:1 bis 1,8:1, bevorzugt 1,2:1 bis 1,6:1, besonders bevorzugt 1,2:1 bis 1,4:1.

Als Komponente C) können beliebige Pigmente und Füllstoffe eingesetzt werden, so wie dies aus der Herstellung von Dispersionsanstrichfarben bekannt ist. Vorzugsweise werden Gemische aus verschiedenen Pigmenten und Füllstoffen eingesetzt. Als Beispiele für Komponente C) seien genannt: Aluminiumoxid, Quarzmehl, Magnesium- und Calciumphosphate und/oder -carbonate, Aluminiumhydroxid, Titandioxid, Zinkoxid, Glimmer, Talkum, Eisenoxid, verschiedene Spinelle, Ruß, Graphit, Glas- und Emailpulver usw. Ganz besonders bevorzugt sind C) Eisenoxide und Titandioxid, Calciumcarbonat, Talkum und/oder Glimmer.

Die Komponente C) kann auch jeder Zusatzstoff, der zur Herstellung von Lacken und Farben bekannt ist, sein, wie z.B. Lackadditive, wie Dispergier-, Verlauf-, Verdickungs-, Entschäumungs-, Filmbilde- und andere Hilfsmittel, Fungizide, Bakterizide, Stabilisatoren, Inhibitoren sowie Katalysatoren und pH-Regler.

Die erfindungsgemäßen Anstrichstoffe enthalten 30 bis 90, bevorzugt 40 bis 80, besonders bevorzugt 50 bis 70 Gew.-% Feststoff. Die wäßrige Phase kann gegebenenfalls organische Lösemittel enthalten.

In einer Ausführungsform der vorliegenden Erfindung entspricht Komponente D) vorzugsweise Natrium- und Kaliumsilikonat. Entspricht D) einem Alkylalkoxypolysiloxan, so können beliebige Verbindungen dieser Art eingesetzt werden. Bevorzugt sind jedoch Polysiloxane mit zwei verschiedenen Alkylresten, besonders bevorzugt sind Gemische aus Methylresten mit Alkylresten mit 4 bis 14 Kohlenstoffatomen. Als Alkoxyrest werden Methoxy- und Ethoxyreste bevorzugt. Besonders bevorzugt sind Ethoxyreste.

In einer weiteren Ausführungsform der vorliegenden Erfindung ist D) vorzugsweise Kaliummethylsilikonat und/oder Alkylalkoxysiloxan nachfolgender statistischer Zusammensetzung 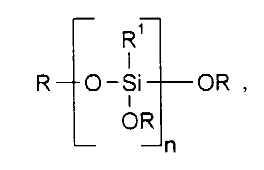 worin
- R¹: eine Methyl-, iso-Propyl, iso-Butylgruppe oder eine C₁-C₈-Alkylgruppe
- R: Methyl- oder Ethyl,
- n: eine Zahl von 3 bis 20, bevorzugt 3 bis 10, besonders bevorzugt 4 bis 6 bedeutet
und das Gew.-Verhältnis von Methyl zu höherem Alkyl 8:1 bis 0,5:1, bevorzugt 6:1 bis 1:1, besonders bevorzugt 5:1 bis 3:1 ist.

Die Anwesenheit der Komponente D) führt im allgemeinen zur Verbesserung der anwendungstechnischen Eigenschaften der erfindungsgemäßen Anstrichstoffe, ist jedoch nicht zwingend notwendig. So können auch beim Verzicht auf Komponente D) Beschichtungen erhalten werden, die in ihren Eigenschaften die nach dem Stand der Technik bekannten Anstrichmaterialien überragen.

Gegenstand der vorliegenden Erfindung ist auch ein Verfahren zur Herstellung der erfindungsgemäßen Anstrichstoffe, wobei die Einzelkomponenten A) bis C) und gegebenenfalls D) bei Raumtemperatur miteinander verrührt werden. Die Herstellung kann nach an sich bekannten Verfahren unter Verwendung von Rühraggregaten, Mühlen oder ähnlichen erfolgen. In einer Ausführungsform der vorliegenden Erfindung wird Wasser, gegebenenfalls zusammen mit den Hilfsstoffen vorgelegt. Unter Rühren werden nacheinander oder zusammen Pigmente und Füllstoffe, gegebenenfalls in Form ihrer wäßrigen Dispersionen, und danach die Polymerdispersion zugegeben. Anschließend wird die Polysiloxan-Emulsion und dann Kaliummethylsilikonat zugemischt. Die gewünschten rheologischen Eigenschaften können anschließend mit einem organischen und/oder anorganischen Verdickungsmittel eingestellt werden. Zur Verbesserung der Lagerstabilität der erfindungsgemäßen Anstrichstoffe wird deren pH-Wert auf >7, bevorzugt auf 8 bis 9 eingestellt.

Gegenstand der vorliegenden Erfindung ist auch ein Verfahren zur Herstellung von Beschichtungen aus den erfindungsgemäßen Anstrichstoffen, wobei die Anstrichstoffe z.B. durch Streichen, Rollen, Tauchen oder Spritzen auf mineralische Untergründe, wie Fassaden, Putze und/oder Baustoffe, z.B. aus Kalksandstein oder Ziegeln aufgebracht und anschließend, vorzugsweise bei Raumtemperatur, getrocknet werden. Je nach Anforderungen können auf diese Weise Beschichtungen mit Schichtdicken von 10 bis 500 µm, bevorzugt 20 bis 300 µm, besonders bevorzugt 50 bis 200 µm eingestellt werden.

Die erfindungsgemäßen Beschichtungen zeichnen sich vor allem durch eine hohe Wasserdampfdurchlässigkeit und eine niedrige Wasseraufnahme aus, wie die nachfolgenden Beispiele zeigen.

Gegenstand der vorliegenden Erfindung ist auch die Verwendung der erfindungsgemäßen Anstrichstoffe zur Beschichtung von Baustoffen, Fassaden und Putzen beliebiger Art.

Die nachfolgenden Beispiele erläutern die Erfindung. Die Erfindung selber ist jedoch nicht auf diese Beispiele beschränkt.

### Ausführungsbeispiele

Im folgenden werden die nachstehend genannten Abkürzungen und Meßgrößen verwendet:
- PVK:: Gew.-Verhältnis von Pigment und Füllstoff zu Bindemittel; ausgedrückt in Vol.-%.
- W₂₄-Wert:: Wasseraufnahmekoeffizient nach 24 Stunden. Ergebnis der Untersuchungen der kapillaren Wasseraufnahme an beschichten Kalksandsteinscheiben. Prüfverfahren in Anlehnung an DIN 52 617.
- Maßangabe:: kg/m² h ^{0,5}.
- s_{D}-Wert:: Ergebnis der Bestimmung der Diffusionswiderstandszahl µ H₂O für Wasserdampf in Anlehnung an DIN 53 122 (Feuchtigkeitsgefälle 93 % relative Feuchtigkeit → 50 % relative Feuchtigkeit). s_{D} ergibt sich aus der Beziehung von µ H₂O x s(äquivalente Luftschicht). Dabei gibt s die Schichtdicke der Beschichtung an. Die Schichtdicken der untersuchten Beschichtungen betrugen ca. 200 µm.

### Allgemeine Vorschrift zur Herstellung der Anstrichstoffe

Die zugehörigen Wirkstoffkonzentrationen, die Kettenlänge des in den Beispielen eingesetzten Polysiloxans der Formel 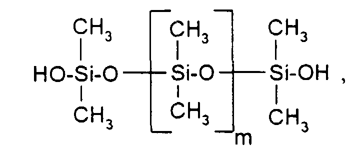 das Verhältnis Polymerdispersion zu Polysiloxan sowie die Meßwerte sind in Tabelle 1 aufgelistet.

Zu einer Dispersion (siehe Tabelle 1) mit den in Tabelle 1 aufgelisteten Gehalten an Wirkstoff wurde Titandioxid (Rutil) als Pigment und Calciumcarbonat (Calcit in beiden Fällen), Talkum und Glimmer als Füllstoff (PKV siehe Tabelle 1) zugemischt. Zu dieser Mischung wurde Kaliummethylsiliconat (in handelsüblichen Konzentrationen) so zugegeben, daß eine Konzentration von 0,3 Gew.-% Kaliummethylsiliconat-Wirksubstanz erreicht wurde.

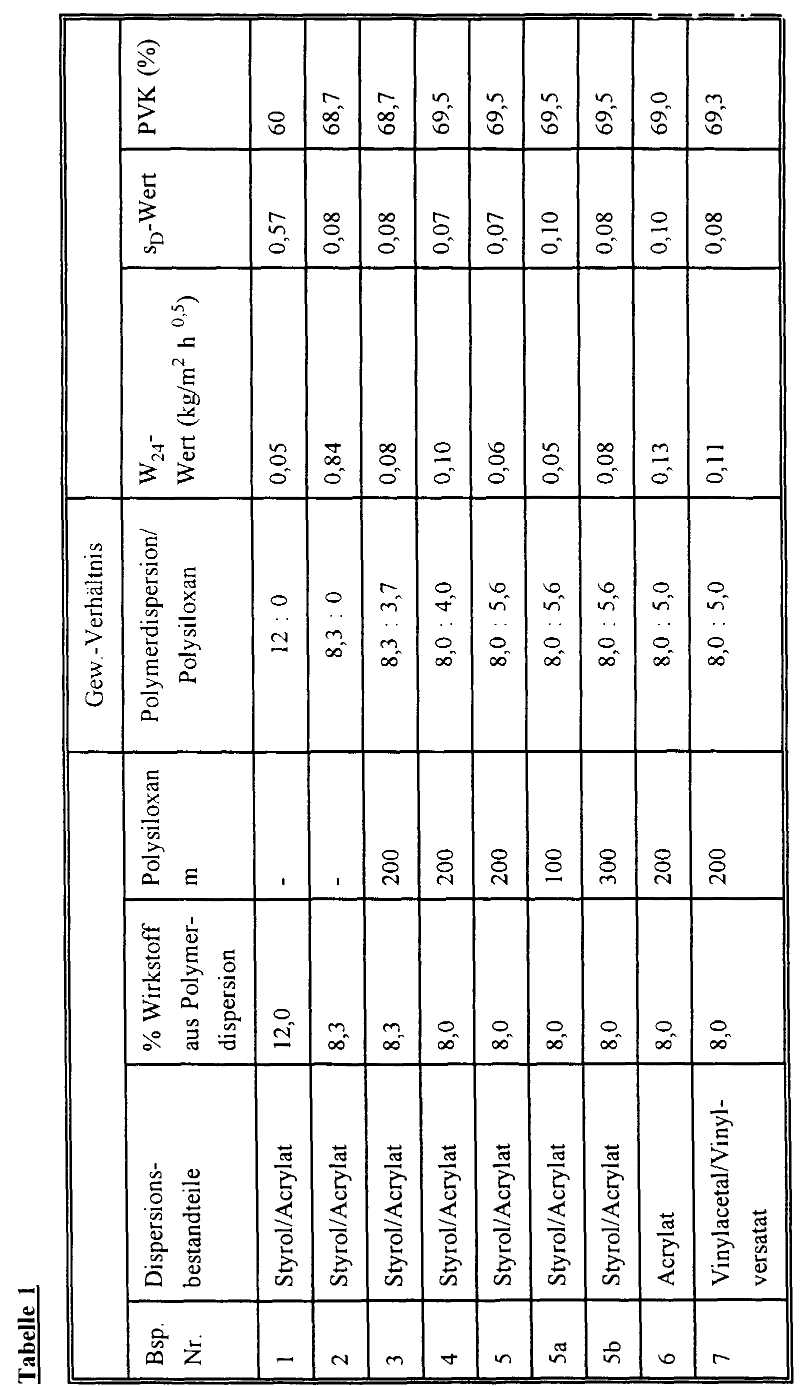

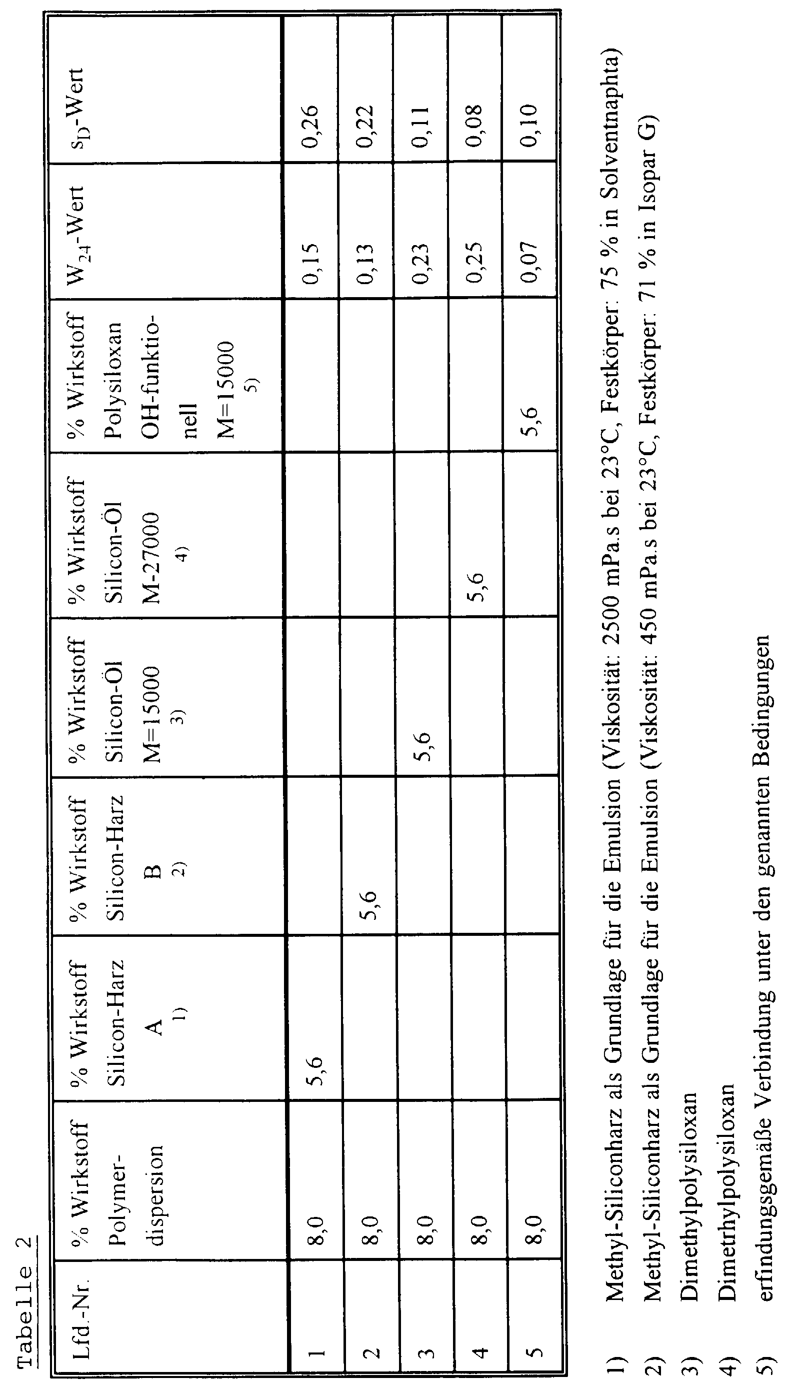

## Patentansprüche

1. Anstrichstoffe, enthaltend
A) mindestens eine wasserverdünnbare Polymerdispersion,
B) mindestens ein endständig hydroxylgruppenhaltiges, lineares Polydimethylsiloxan,
C) mindestens ein Pigment, und/oder mindestens einen Füllstoff und gegebenenfalls
D) Alkalisilikonate, Alkylalkoxypolysiloxane und/oder weitere Zusatzstoffe,
dadurch gekennzeichnet, daß diese 4 bis 12 Gew.-% mindestens einer Polymerdispersion A),
B) 3 bis 8 Gew.-%, der Verbindung 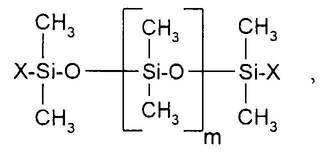 worin
X einer Hydroxylgruppe oder einer Alkoxygruppe entspricht,
m eine Zahl von 50 bis 1000 bedeutet,
C) 35 bis 65 Gew.-% Pigmente, Füllstoffe,
und gegebenenfalls
D) 0 bis 2 Gew.-% mindestens eines Alkalisilikonats und/oder Alkylalkoxypolysiloxans und 7 bis 58 Gew.-% Wasser und gegebenenfalls weitere Zusätze enthalten,
wobei die Summe der Verbindungen A), B), C) und D) 100 Gew.-% beträgt, das Gew.-Verhältnis von A) und B) >1, das Gew.-Verhältnis von A) und C) 1:5 bis 1:10 ist und die Gewichtsprozentangaben sich auf die Wirksubstanz beziehen.

2. Anstrichstoffe nach Anspruche 1, dadurch gekennzeichnet, daß Komponente A) eine Poly(meth)acrylat- und/oder eine Polystyrol/(Meth)acrylat-Dispersion ist.

3. Anstrichstoffe nach einem der Ansprüche 1 bis 2, dadurch gekennzeichnet, daß B) ein mittleres Molekulargewicht von 6000 bis 50000 besitzt, frei von organischen Lösemitteln ist und als wäßrige Emulsion vorliegt.

4. Anstrichstoffe nach einem der Ansprüche 1 bis 3, dadurch gekennzeichnet, daß C) Eisenoxide, Titandioxid, Calciumcarbonat, Talkum und/oder Glimmer sind.

5. Anstrichstoffe nach einem der Ansprüche 1 bis 4, dadurch gekennzeichnet, daß D) Kaliummethylsilikonat und/oder ein Alkylalkoxysiloxan nachfolgender statistischer Zusammensetzung 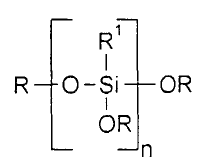 ist, worin
R¹ eine Methyl-, iso-Propyl, iso-Butylgruppe oder eine C₁-C₈-Alkylgruppe
R Methyl- oder Ethyl,
n eine Zahl von 3 bis 20 bedeutet
und das Verhältnis von Methyl- zu höherem Alkyl 8:1 bis 0,5:1 ist.

6. Anstrichstoffe nach einem der Ansprüche 1 bis 5, dadurch gekennzeichnet, daß das Gewichtsverhältnis der Komponenten A) und B) 1,1:1 bis 1,8:1 beträgt.

7. Verfahren zur Herstellung von Anstrichstoffen nach einem der Ansprüche 1 bis 6, dadurch gekennzeichnet, daß die Einzelkomponenten A) bis C) und gegebenenfalls D) bei Raumtemperatur miteinander verrührt werden.

8. Verfahren zur Herstellung von Beschichtungen aus Anstrichstoffen nach einem der Ansprüche 1 bis 6, dadurch gekennzeichnet, daß die Anstrichstoffe durch Streichen, Rollen, Tauchen oder Spritzen auf mineralische Untergründe, wie Fassaden, Putze und/oder Baustoffe, aus Kalksandstein oder Ziegeln, aufgebracht und anschließend getrocknet werden.

9. Verwendung der Anstrichstoffe nach einem der Ansprüche 1 bis 7 zur Beschichtung von Baustoffen, Fassaden und Putzen beliebiger Art.

## Claims

1. Coating materials comprising
A) at least one water-dilutable polymer dispersion,
B) at least one linear polydimethylsiloxane containing terminal hydroxyl groups,
C) at least one pigment and/or at least one filler and optionally
D) alkali metal siliconates, alkylalkoxypolysiloxanes and/or further additives,
characterized in that they contain from 4 to 12% by weight of at least one polymer dispersion A),
B) from 3 to 8% by weight of the compound 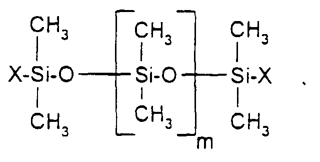 in which
X corresponds to a hydroxyl group or to an alkoxy group,
m denotes a number from 50 to 1000,
C) from 35 to 65% by weight of pigments, fillers,
and optionally
D) from 0 to 2% by weight of at least one alkali metal siliconate and/or alkylalkoxypolysiloxane and from 7 to 58% by weight of water and optionally further additives,
the sum of the compounds A), B), C) and D) being 100% by weight, the weight ratio of A) to B) being > 1, the weight ratio of A) to C) being from 1:5 to 1:10, and the percentages by weight being based on the active substance.

2. Coating materials according to Claim 1, characterized in that component A) is a poly(meth)acrylate dispersion and/or a polystyrene/(meth)acrylate dispersion.

3. Coating materials according to one of Claims 1 to 2, characterized in that B) has an average molecular weight of from 6000 to 50,000, is free from organic solvents and is in the form of an aqueous emulsion.

4. Coating materials according to one of Claims 1 to 3, characterized in that C) comprises iron oxides, titanium dioxide, calcium carbonate, talc and/or mica.

5. Coating materials according to one of Claims 1 to 4, characterized in that D) comprises potassium methylsiliconate and/or an alkylalkoxysiloxane having the following statistical composition 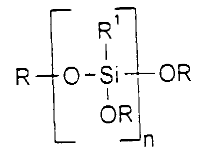 in which
R¹ denotes a methyl, isopropyl, isobutyl or C₁-C₈ alkyl group,
R denotes methyl or ethyl,
n denotes a number from 3 to 20
and the ratio of methyl to higher alkyl is from 8:1 to 0.5:1.

6. Coating materials according to one of Claims 1 to 5, characterized in that the weight ratio of component A) to B) is from 1.1:1 to 1.8:1.

7. Process for preparing coating materials according to one of Claims 1 to 6, characterized in that the individual components A) to C) and optionally D) are stirred together with one another at room temperature.

8. Process for producing coatings from coating materials according to one of Claims 1 to 6, characterized in that the coating materials are applied by brushing, rolling, dipping or spraying to mineral substrates, such as facings, plasters and/or building materials, of lime sandstone or bricks, and are subsequently dried.

9. Use of the coating materials according to one of Claims 1 to 7 to coat building materials, facings and plasters of any kind.

## Revendications

1. Compositions de revêtement contenant
A) au moins une dispersion polymère diluable à l'eau,
B) au moins un polydiméthylsiloxane linéaire contenant des groupes hydroxyles terminaux,
C) au moins un pigment et/ou au moins une charge et éventuellement
D) des siliconates alcalins, des alkylalcoxypolysiloxanes et/ou d'autres additifs,
caractérisées en ce que celles-ci contiennent 4 à 12 % en masse d'au moins une dispersion polymère A),
B) 3 à 8 % en masse du composé 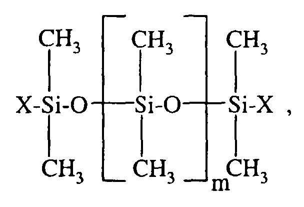 où
X correspond à un groupe hydroxyle ou à un groupe alcoxy,
m représente un nombre de 50 à 1 000,
C) 35 à 65 % en masse de pigments, de charges,
et éventuellement
D) 0 à 2 % en masse d'au moins un siliconate alcalin et/ou d'au moins un alkylalcoxypolysiloxane et 7 à 58 % en masse d'eau et éventuellement d'autres additifs,
où la somme des composés A), B), C) et D) est égale à 100 % en masse, le rapport massique de A) et B) est supérieur à 1, le rapport massique de A) et C) est de 1 : 5 à 1 : 10 et les données en pourcentages en masse sont rapportées à la substance active.

2. Compositions de revêtement selon la revendication 1, caractérisées en ce que le composant A) est une dispersion de poly(méth)acrylate et/ou de polystyrène/(méth)acrylate.

3. Compositions de revêtement selon l'une des revendications 1 et 2, caractérisées en ce que B) possède une masse moléculaire moyenne de 6 000 à 50 000, est exempt de solvants organiques et est sous forme d'une émulsion aqueuse.

4. Compositions de revêtement selon l'une des revendications 1 à 3, caractérisées en ce que C) représente des oxydes de fer, du dioxyde de titane, du carbonate de calcium, du talc et/ou du mica.

5. Compositions de revêtement selon l'une des revendications 1 à 4, caractérisées en ce que D) est le méthylsiliconate de potassium et/ou un alkylalcoxysiloxane de composition statistique suivante 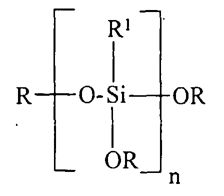 où
R¹ représente un groupe méthyle, isopropyle, isobutyle ou un groupe alkyle en C₁-C₈,
R représente méthyle ou éthyle,
n représente un nombre de 3 à 20
et le rapport de méthyle à alkyle supérieur est de 8 : 1 à 0,5 : 1.

6. Compositions de revêtement selon l'une des revendications 1 à 5, caractérisées en ce que le rapport massique des composants A) et B) est de 1,1 : 1 à 1,8 : 1.

7. Procédé de préparation de compositions de revêtement selon l'une des revendications 1 à 6, caractérisé en ce que les composants individuels A) à C) et éventuellement D) sont mélangés entre eux à la température ambiante.

8. Procédé de production de revêtements constitués par des compositions de revêtement selon l'une des revendications 1 à 6, caractérisé en ce que les compositions de revêtement sont appliquées par enduction, application au rouleau, immersion ou pulvérisation sur des supports minéraux comme les façades, les crépis et/ou les matériaux de construction, en grès calcaire ou en briques, puis sont séchées.

9. Utilisation des compositions de revêtement selon l'une des revendications 1 à 7 pour revêtir des matériaux de construction, des façades et des crépis de tout type.
